# EUROPEAN PATENT APPLICATION

(11) **EP 3 069 638 A1**
(43) Date of publication of application: **21.09.2016**
(21) Application number: 14859643.0
(22) Date of filing: 11.11.2014
(51) Int. Cl.: A47J 19/02

(54) **JUICER HAVING USB CONNECTOR**

(30) Priority: 11.11.2013 CN 201320708106 U
(71) Applicant: Lee, Wen-Ching, Taichung City 408 (TW)
(72) Inventor: Lee, Wen-Ching, Taichung City 408 (TW)
(74) Representative: Becker Kurig Straus
(86) International application number: PCT/CN2014/000991
(87) International publication number: WO 2015/066970

(57) **Abstract**

A juicer (10) with a USB connector (15) includes a juicer body (11) and a power socket (12) connected at the juicer body (11). The juicer (10) is characterized by further including a supporting device (13), a USB circuit board (14), the USB connector (15), and a dust cover (16). The supporting device (13) is provided on the juicer body (11) and has an engaging groove (131). The USB circuit board (14) is provided in the juicer body (11). The USB connector (15) is fixedly provided on the juicer body (11) and electrically connected to the USB circuit board (14). The dust cover (16) covers the outside USB connector (15). The engaging groove (131) can support a portable electronic product while the USB circuit board (14) and the USB connector (15) charge the portable electronic product.

## Description

### BACKGROUND OF THE INVENTION

### 1. Technical Field

The present invention relates to electrical home appliances and more particularly to a juicer with a USB connector.

### 2. Description of Related Art

A juicer is a machine for extracting juice mechanically from fruit or vegetables. With the rise of living standards nowadays, juicers have been used in more and more homes to provide delicious juices and drinks. Nevertheless, the existing juicers have only one function, i.e., juice extraction, and therefore do nothing more than taking up spaces when not in use.

In addition, as living standards rise, portable electronic products such as mobile phones and tablet computers have come into extensive use. Generally, a portable electronic product has a battery as its major power source. When the battery is dead or running out of electricity, a corresponding charger is required to charge the battery, but it is often the case that the user of the portable electronic product does not carry the charger with him or her. In the absence of such chargers, the portable electronic product cannot be charged.

Moreover, juicers are usually placed in a kitchen, which is designed for cooking and therefore seldom provides places or devices where portable electronic products can be put. Consequently, the user of a portable electronic product may have problem operating the product freely or viewing the contents displayed on its screen while cooking.

### BRIEF SUMMARY OF THE INVENTION

In the light of the aforementioned drawbacks, the present invention provides a juicer having a USB connector. The juicer is configured not only for juice extraction, but also for supporting a portable electronic product in an upright position and charging the portable electronic product through the USB connector.

The juicer with the USB connector further has a structure for supporting a portable electronic product such as a mobile phone or tablet computer.

To achieve the foregoing objectives, the juicer with a USB connector according to the present invention includes a juicer body and a power socket connected to the juicer body and is characterized by further including a supporting device, a USB circuit board, and a dust cover in addition to the USB connector. The supporting device is provided on the juicer body and has an engaging groove. The USB circuit board is provided in the juicer body. The USB connector is fixedly provided on the juicer body and electrically connected to the USB circuit board. The dust cover covers the outside USB connector.

Thus, the juicer with the USB connector is enhanced in function: it can support a portable electronic product placed in the engaging groove and charge the portable electronic product via the USB connector.

Preferably, the supporting device further has a supporting wall, a stop wall, and a bottom plate. The supporting wall, the stop wall, and the bottom plate jointly define the engaging groove. The supporting wall is spaced from and faces the stop wall. The supporting wall has a greater height than the stop wall. The bottom plate extends from the stop wall and is located between the supporting wall and the stop wall. A portable electronic product can therefore be supported by the supporting wall and the bottom plate and held in place by the stop wall, which keeps the portable electronic product from sliding off the supporting device.

Preferably, the supporting wall is inclined so that the portable electronic product placed in the engaging groove is also inclined to facilitate viewing and operation.

The structures, features, assembly method, and use of the juicer with a USB connector of the present invention will be elucidated in the DETAILED DESCRIPTION OF THE INVENTION section that follows. As a person of ordinary skill in the art would understand, the detailed description and the specific embodiment provided herein are for illustrative purposes only and are not intended to be restrictive of the scope of the invention.

### BRIEF DESCRIPTION OF THE SEVERAL VIEWS OF THE DRAWINGS

FIG. 1 is a perspective view of a juicer with a USB connector according to the present invention;
FIG. 2 is a perspective view in which the juicer body and the supporting device in FIG. 1 are separate from each other;
FIG. 3 is a perspective view, from a different viewing angle, of the juicer in FIG. 1;
FIG. 4 is an enlarged view of the circled area in FIG. 3;
FIG. 5 is a top view of the supporting device in FIG. 1; and
FIG. 6 is a sectional view of the supporting device in FIG. 5 taken along the line 6-6.

### DETAILED DESCRIPTION OF THE INVENTION

The components and effects of the juicer with a USB connector of the present invention are described below with reference to the preferred embodiment depicted in the drawings. Please note that the components, dimensions, and appearance of the juicer with the USB connector in the drawings serve only to demonstrate the technical features of the present invention and do not impose limitations on the invention.

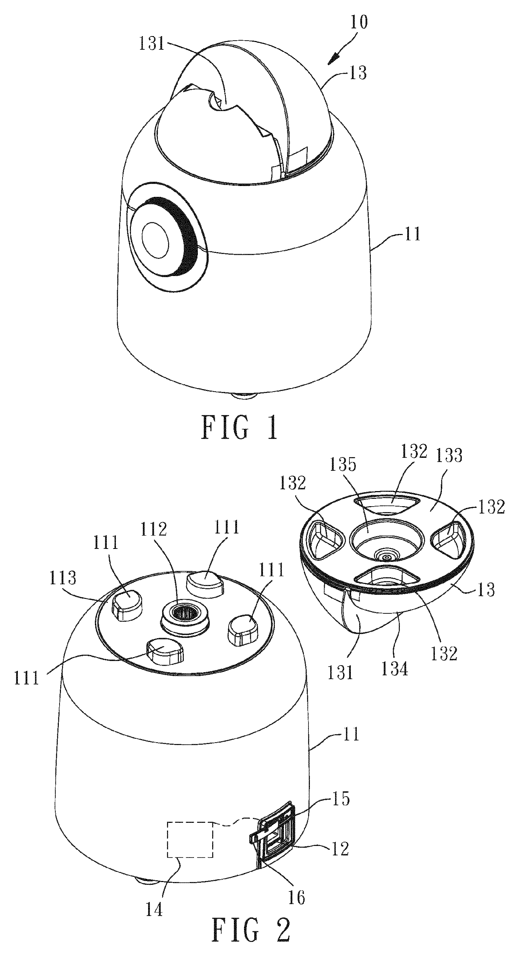

Referring to FIG. 1 and FIG. 2, the juicer 10 with a USB connector according to the present invention includes a juicer body 11 and a power socket 12 provided on the juicer body 11. The power socket 12 is configured to connect to a power source through a power cord in order to enable operation of the juicer body 11. The juicer 10 also includes a motor, a control circuit, and so on, which are well known in the art of juicers but not the technical features of the present invention and therefore will not be dealt with herein.

The juicer 10 with a USB connector according to the present invention is characterized by further including a supporting device 13, a USB circuit board 14, a USB connector 15, and a dust cover 16, wherein USB stands for Universal Serial Bus.

The supporting device 13 can be mounted to and detached from the juicer body 11. The supporting device 13 has an engaging groove 131 in which a portable electronic product such as a smartphone or tablet computer, or more particularly a portion of the portable electronic product, can be placed.

The USB circuit board 14 is provided in the juicer body 11 and can be implemented in many ways. For example, the USB circuit board 14 may be a USB integrated circuit integrated with the aforesaid control circuit, or a USB control module integrated with the aforesaid control circuit, or a USB control module separate from but electrically connected to the aforesaid control circuit.

The USB connector 15 is fixedly provided on the juicer body 11 and electrically connected to the USB circuit board 14. With a USB cable (not shown), the USB connector 15 can be connected to a USB connector of a portable electronic product. The USB circuit board 14 can supply the USB connector 15 with the charging electricity corresponding to the portable electronic product in order to charge the portable electronic product. As such, the juicer with the USB connector can be used to charge portable electronic products.

The dust cover 16 covers at the outside USB connector 15 and can be moved with respect to the USB connector 15. When covering the USB connector 15, the dust cover 16 prevents dust and the oil in cooking fumes from depositing on the USB connector 15. When it is desired to use the USB connector 15, the dust cover 16 is opened so that a USB plug (not shown) can be inserted into the USB connector 15.

The juicer body 11 has a plurality of fixing blocks 111 and a motor connector 112. The fixing blocks 111 protrude from a top surface 113 of the juicer body 11 and surround the motor connector 112. The motor connector 112 is configured to connect with the blades (not shown) of the juicer. The supporting device 13 has a plurality of alignment holes 132, which are located at a bottom portion 133 of the supporting device 13 and are configured to mate with the fixing blocks 111 in a one-to-one manner, thereby keeping the supporting device 13 from moving with respect to the juicer body 11. The engaging groove 131 is located at a top portion 134 of the supporting device 13.

Generally, the motor connector 112 of the juicer body 11 protrudes slightly from the top surface 113 of the juicer body 11, and because of that, the supporting device 13 further has a receiving hole 135 for receiving the motor connector 112, lest the motor connector 112 interfere with the mounting of the supporting device 13.

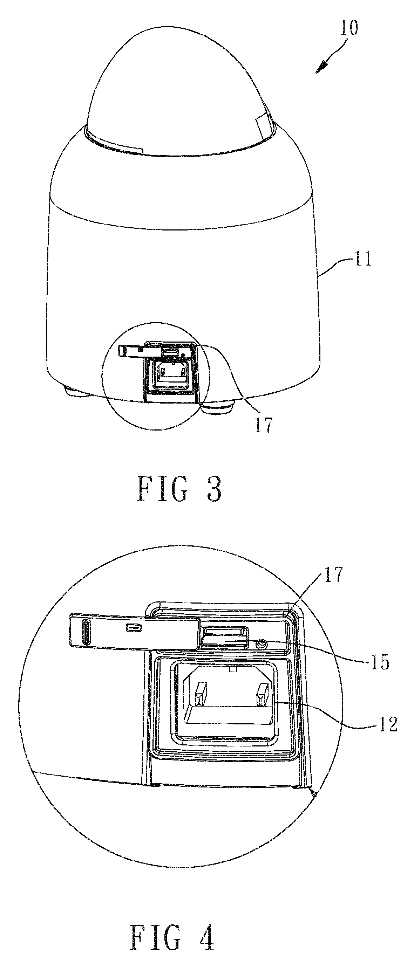

As shown in FIG. 3 and FIG. 4, the juicer 10 with the USB connector according to the present invention further includes a frame 17. The frame 17 is fixedly provided on the juicer body 11 and secures the power socket 12 and the USB connector 15 in place. In this embodiment, the USB connector 15 and the power socket 12 are adjacent to each other, but they need not be juxtaposed as shown and may be arranged separately instead.

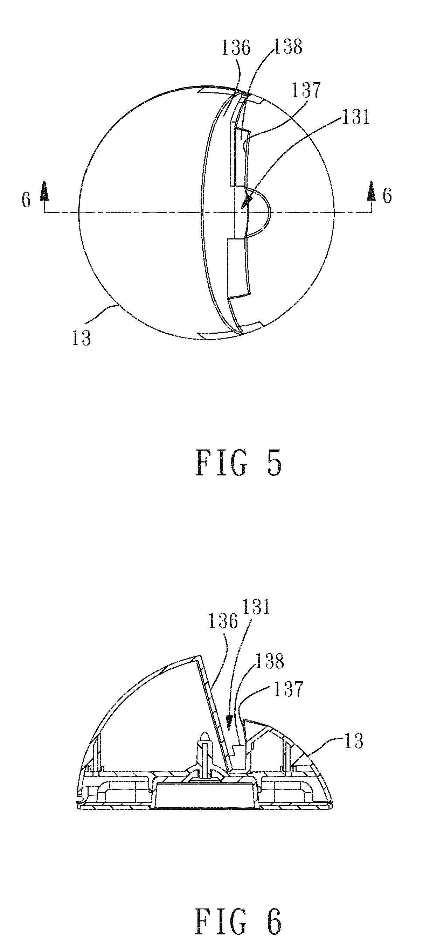

Referring to FIG. 5 and FIG. 6, the supporting device 13 in this embodiment has a curved shape. The supporting device 13 further has a supporting wall 136, a stop wall 137, and a bottom plate 138. The supporting wall 136, the stop wall 137, and the bottom plate 138 jointly define the engaging groove 131. The supporting wall 136 is spaced from and faces the stop wall 137. The supporting wall 136 has a greater height than the stop wall 137. The bottom plate 138 extends from the stop wall 137 and is located between the supporting wall 136 and the stop wall 137. Thus, a tablet computer or mobile phone placed in the engaging groove 131 is supported by the supporting wall 136 and the bottom plate 138 and retained by the stop wall 137, which keeps the tablet computer or mobile phone from sliding off the supporting device 13.

In particular, the supporting wall 136 is inclined, so a tablet computer or mobile phone placed in the engaging groove 131 and leaning against the supporting wall 136 is tilted, too. This allows the user to view with ease the contents displaced on the screen of the tablet computer or mobile phone. In practice, however, the supporting wall 136 is not necessarily inclined and may be designed otherwise.

Moreover, while the supporting wall 136, the stop wall 137, and the bottom plate 138 in this embodiment are all planar structures, they may be other types of structures, including non-continuous planar structures, provided that they jointly define the engaging groove 131. Hence, the structure of the engaging groove 131 is not limited to that disclosed in this embodiment.

It should be pointed out again that the components disclosed in the foregoing embodiment are for illustrative purposes only and are not restrictive of the scope of the present invention. All equivalent substitutions and variations of the disclosed components should fall within the scope of the invention.

## Claims

1. A juicer (10) with a USB connector (15), comprising a juicer body (11) and a power socket (12) connected to the juicer body (11), the juicer (10) being **characterized in that**:
a supporting device (13) located on the juicer body (11), the supporting device (13) having an engaging groove (131);
a USB circuit board (14) connected in the juicer body (11);
a USB connector (15) fixedly connected at the juicer body (11) and electrically connected to the USB circuit board (14); and
a dust cover (16) covering the outside USB connector (15).

2. The juicer (10) of claim 1, further comprising a frame (17), the frame (17) being fixedly connected at the juicer body (11) and securing the power socket (12) and the USB connecter (15) in place.

3. The juicer (10) of claim 1, wherein the juicer body (11) has a plurality of fixing blocks (111), the supporting device (13) has a plurality of alignment holes (132), the alignment holes (132) are located at a bottom portion (133) of the supporting device (13) and configured to mate with the fixing blocks (111) in a one-to-one manner, the engaging groove (131) is located at a top portion (134) of the supporting device (13).

4. The juicer (10) of claim 1, wherein the supporting device (13) further has a supporting wall (136), a stop wall (137), and a bottom plate (138); the supporting wall (136), the stop wall (137), and the bottom plate (138) jointly define the engaging groove (131); the supporting wall (136) is spaced from and faces the stop wall (137); the supporting wall (136) has a greater height than the stop wall (137); the bottom plate (138) extends from the stop wall (137) and is located between the supporting wall (136) and the stop wall (137).

5. The juicer (10) of claim 4, wherein the supporting wall (136) is inclined.

6. The juicer (10) of claim 1, wherein the engaging groove (131) is configured to receive a portable electronic product placed therein, and the USB circuit board (14) is configured to generate charging electricity and supply the charging electricity to the USB connector (15) in order to charge the portable electronic product.
